# EUROPÄISCHE PATENTSCHRIFT

(11) **EP 3 467 378 B1**
(45) Veröffentlichungstag und Bekanntmachung des Hinweises auf die Patenterteilung: **30.11.2022**
(21) Anmeldenummer: 18196814.0
(22) Anmeldetag: 26.09.2018
(51) Int. Cl.: F22D 1/50, B01D 5/00, C02F 1/20, B01D 19/00, F24S 40/48

(54) **ABHITZEANLAGE FÜR HEISSWASSERERZEUGUNG UND VERFAHREN ZUM BETREIBEN EINER ABHITZEANLAGE FÜR HEISSWASSERERZEUGUNG**
WASTE HEAT INSTALLATION FOR HOT WATER GENERATION AND METHOD FOR OPERATING SAME
INSTALLATION À FLAMMES PERDUES POUR LA PRODUCTION D'EAU CHAUDE ET PROCÉDÉ DE FONCTIONNEMENT D'UNE INSTALLATION À FLAMMES PERDUES POUR LA PRODUCTION D'EAU CHAUDE

(30) Priorität: 04.10.2017 EP 17194797
(43) Veröffentlichungstag der Anmeldung: 10.04.2019
(73) Patentinhaber: Primetals Technologies Austria GmbH, 4031 Linz (AT)
(72) Erfinder: Haselgruebler, Manfred, 4048 Puchenau (AT); Trunner, Paul, 4060 Leonding (AT); Steinparzer, Thomas, 4040 Linz (AT)
(74) Vertreter: Metals@Linz

(56) Entgegenhaltungen:
- WO-A1-96/36792
- DE-A1-102009 004 622
- DE-C- 511 005
- FR-A1- 2 524 547
- US-A- 4 555 906
- US-A- 5 904 039

## Beschreibung

### Gebiet der Technik

Die vorliegende Erfindung betrifft das Gebiet der Wärmerückgewinnung aus Abwärme von großen wärmeerzeugenden Industrieanlagen. Besonders in der Stahl- und Eisenverarbeitenden Industrie entstehen große Wärmemengen, welche abgeführt werden müssen und möglichst einer Nachnutzung zugeführt werden sollen. Dies ermöglicht eine energieeffiziente Betriebsweise solcher Industrieanlagen.

Einerseits betrifft die Erfindung eine Abhitzeanlage für die Heißwassererzeugung umfassend eine Beheizungseinrichtung - zum Erwärmen von Kreislaufwasser - aufweisend einen Beheizungseinrichtungseingang und einen Beheizungseinrichtungsausgang, eine Vorlaufleitung für Kreislaufwasser mit einer Vorlauftemperatur über 110°C, zumindest ein Wärmeverbraucher, aufweisend einen Wärmeverbrauchereingang und einen Wärmeverbraucherausgang, eine Rücklaufleitung für Kreislaufwasser wobei der Beheizungseinrichtungsausgang und der Wärmeverbrauchereingang an die Vorlaufleitung angeschlossen sind und der Beheizungseinrichtungseingang und der Wärmeverbraucherausgang an die Rücklaufleitung angeschlossen sind und eine Umwälzpumpe.

Andererseits betrifft die Erfindung ein Verfahren zum Betreiben einer Abhitzeanlage für die Heißwassererzeugung, mit einem geschlossenen Wasserkreislauf. Ein Rücklaufwasserstrom wird durch eine Beheizungseinrichtung auf eine Vorlauftemperatur von über 110°C, zu einem Vorlaufwasserstrom, aufgeheizt. Der geschlossene Wasserkreislauf wird mit einem Betriebsdruck betrieben, der über dem Dampfdruck der Vorlauftemperatur liegt, damit der Vorlaufwasserstrom ausschließlich im flüssigen Zustand verbleibt. Aus dem Vorlaufwasserstrom wird an zumindest einem Wärmeverbraucher Wärmeenergie aus dem Vorlaufwasserstrom entzogen.

Des Weiteren umfasst die Erfindung auch ein Computerprogramm, welches das Verfahren zum Betreiben einer Abhitzeanlage für die Heißwassererzeugung ausführt.

Ein weiterer Gegenstand der Erfindung ist ein Computerlesbares Medium, welches das Computerprogramm speichert.

### Stand der Technik

Solche Abhitzeanlagen für die Heißwassererzeugung ist mit einem Fernwärmenetz, wie in der DE3446748 A1 gezeigt, vergleichbar.

In der DE3446748 A1 ist ein Zweidrucksystem gezeigt, wobei eine Vorlaufleitung einen sechs- bis zehnmal größeren Druck aufweist als eine dazugehörende Rücklaufleitung. Die Vorlaufleitung wird mit einer Betriebstemperatur von 160°C und einem Betriebsdruck von 12 bar betrieben. Die Rücklaufleitung weist eine Temperatur von 50°C bis 60°C auf. Es sind, wie in der DE3446748 A1 beschrieben, auch Fernwärmenetze, bei denen Vorlauf und Rücklauf den gleichen Druckbereich aufweisen, bekannt.

Es ist bekannt, dass solche Fernwärmenetze ein Ausgleichsgefäß zur Kompensation von Volumenänderungen von Kreislaufwasser aufweisen.

Um die Lebensdauer von Rohrleitungen, Kesselanlagen, Pumpen und Armaturen in thermischen Heißwasser Anlagen zu erhöhen, ist eine entsprechende Qualität von Kreislaufwasser notwendig. Besonders im Kreislaufwasser gebundene Gase, wie zum Beispiel Sauerstoff und Kohlendioxid, führen zu Korrosionserscheinungen und müssen aus dem Kreislaufwasser entfernt werden. Dies geschieht durch eine Entgasung von zugeführtem Frischwasser.

Eine Entgasung von Frischwasser wird durch einen eigens dafür vorgesehen Entgaser durchgeführt. Ein solcher Entgaser kann entweder durch externe Beheizung oder durch Aufbringen von Vakuum betrieben werden. Durch chemische Zugabe von Sauerstoffbindemittel kann Sauerstoff zusätzlich chemisch gebunden werden. Eine weitere Möglichkeit ist, wie in der DE2821397-A1 für ein Kombinierte Gas/Dampfturbinenkraftwerk vorgesehen, den Vorlauf bzw. Nutzdampf für das Aufheizen und Entgasen von Frischwasser heranzuziehen. Der Nachteil dieser Methode ist, dass energetisch hochwertiger Dampf für die Entgasung herangezogen wird.

Die US509039 A und WO 96/36792 offenbart eine Gas- und Dampfturbinenanlage, welche eine ausreichende Entgasung des Kondensats der Dampfturbine zu gewährleisten. Es handelt sich dabei um einen Wasser-Dampfkreislauf.

Die US455906 offenbart ebenso ein Dampfkraftwerk.

Dokument US5904039 A offenbart eine Vorrichtung und ein Verfahren zur Entgasung von Kondensat eines kombinierten Gas- und Dampfkraftwerkes.

### Zusammenfassung der Erfindung

Die Aufgabe der vorliegenden Erfindung ist es eine Abhitzeanlage und ein Verfahren für die Heißwassererzeugung zu schaffen, welche einerseits einen Ausgleich von verloren gegangenem Kreislaufwasser ermöglicht, andererseits keinen separaten Entgaser benötigt und keine Wärme aus dem Vorlauf, für eine Entgasung von Wasser, abgezogen wird.

Die Aufgabe wird durch die eingangs genannte Vorrichtung durch folgende Maßnahmen gelöst.

Eine Rücklaufleitung in welcher sich Kreislaufwasser, mit einer Rücklauftemperatur von über 105°C, befindet. Des Weiteren ist eine Ausgleichs-Entgasungsvorrichtung, welche in einen Gassammelraum und einen Wassersammelraum für Kreislaufwasser unterteilt ist, vorgesehen. Die Ausgleichs-Entgasungsvorrichtung weist im Innenraum einen Entgasungsdruck auf, welcher über dem Atmosphärendruck liegt. Eine Druckhaltepumpe sorgt dafür, dass zwischen Ausgleichs-Entgasungsvorrichtung und der Rücklaufleitung Kreislaufwasser ständig gefördert wird. Ein Druckhalteventil ist zwischen Ausgleichs-Entgasungsvorrichtung und der Rücklaufleitung angeordnet, um einen ständigen Rückfluss von Kreislaufwasser von der Rücklaufleitung in Richtung der Ausgleichs-Entgasungsvorrichtung zu gewährleisten.

Für den Fall, dass Kreislaufwasser verloren geht, ist ein Einlass in der Ausgleichs-Entgasungsvorrichtung vorgesehen, um Wasser - vorzugsweise nicht entgastes Wasser - zu speisen. Die Ausgleichs-Entgasungsvorrichtung weist eine Öffnungsvorrichtung auf, welche im Gassammelraum angeordnet ist, um Gase - welche durch eine Entgasung von dem nicht entgasten Wasser oder dem Kreislaufwasser entstehen - abzuführen. Des Weiteren sorgt eine Steuer- und/oder Regeleinrichtung für die Einstellung eines Betriebdruckes der Abhitzeanlage.

Die Steuer- oder Regeleinrichtung steuert und / oder regelt die Druckhaltepumpe und das Druckhalteventil derart, dass sich der Betriebsdruck des Kreislaufwasser - in der Vorlaufleitung und der Rücklaufleitung - einstellt der stets über dem Dampfdruck des Kreislaufwassers in der Vorlaufleitung liegt. Es soll durch die Steuer- und / oder Regeleinrichtung gewährleistet werden, dass ausschließlich Kreislaufwasser in flüssigem Zustand in der Vorlaufleitung und Rücklaufleitung vorliegt. Die Steuer- und / oder Regeleinrichtung stellt sicher, dass der Betriebsdruck also stets über dem Dampfdruck liegt, welcher das Kreislaufwasser in der Vorlaufleitung aufweist. Die Temperatur des Kreislaufwassers in der Vorlaufleitung ist stets größer oder gleich als die Temperatur des Kreislaufwassers in der Rücklaufleitung.

Die Abhitzeanlage mit flüssigem Kreislaufwasser ist einfach und kostengünstig zu betreiben.

Die Öffnungsvorrichtung kann im einfachsten Fall als Bohrung ausgeführt sein, durch welche ein Mindestmenge eines Gas-Dampf Gemisches entweicht. Die Öffnungsvorrichtung kann aber auch als Druckregelventil oder eine Blende ausgeführt sein.

Die Rücklaufleitung fördert das Kreislaufwasser vom Wärmeverbraucher - nach vorzugsweise erfolgter Wärmeentnahme - wieder zurück zur Beheizungseinrichtung.

Der Beheizungseinrichtung wird Wärme zugeführt, damit das Kreislaufwasser aufgeheizt werden kann. Als Kreislaufwasser wird nicht nur das Wasser in der Vorlaufleitung und Rücklaufleitung bezeichnet, sondern auch jenes in der Ausgleichs-Entgasungsvorrichtung , da dies ständig von der Ausgleichs-Entgasungsvorrichtung in die Rücklaufleitung gefördert wird.

Um temperaturbedingte Volumenänderungen ausgleichen zu können, muss zusätzliches Wasser in den Kreislauf eingebracht werden, dies geschieht durch Zufuhr von Kreislaufwasser aus der Ausgleichs-Entgasungsvorrichtung. Des Weiteren können immer wieder Verluste von Kreislaufwasser auftreten. Solche Verluste treten durch undichte Verbindungen von Rohrleitungen und anderen Anlagenteilen auf. Des Weiteren wird ein Teil des Kreislaufwasser in gewissen Zeiträumen abgelassen und erneuert. Das zugeführte nicht entgaste Wasser muss - um Korrosion in der Abhitzeanlage gering zu halten - entgast werden. Dies erfolgt dadurch, dass Rücklaufwasser mit einer Temperatur von über 105°C, ständig durch ein Druckhalteventil, in die Ausgleichs-Entgasungsvorrichtung gleitet wird. Gleichzeitig fördert die Druckhaltepumpe Kreislaufwasser von der Ausgleichs-Entgasungsvorrichtung in die Rücklaufleitung.

Durch einen ständigen Mindestfluss wird eine Beheizung in der Ausgleichs-Entgasungsvorrichtung erzielt, wodurch das ständige Entgasen des nicht entgasten Wassers erreicht wird. Die Ausgleichs-Entgasungsvorrichtung weist einen Entgasungsdruck auf, der über dem in der Umgebung herrschenden Atmosphärendruck liegt. Der Entgasungsdruck liegt etwas unter dem Dampfdruck des Kreislaufwassers in der Rücklaufleitung. Ein weiterer Vorteil der sich durch diese Abhitzeanlage ergibt ist, dass durch den ständigen Rückfluss aus der Rücklaufleitung, über das Druckhalteventil, auch das Kreislaufwasser ständig entgast wird. Das Kreislaufwasser kann ebenfalls noch gebundene Gase aufweisen. Dies ist besonders bei einem Neustart der Abhitzeanlage von Bedeutung, wenn das gesamte Kreislaufwasser erneuert wird, da in diesem Fall noch keine Entgasung, des neu zugeführten Kreislaufwassers, stattgefunden hat. Das Kreislaufwasser aus der Rücklaufleitung hat eine niedrigere Temperatur als jenes in der Vorlaufleitung. Dies ermöglicht es auch, dass die Ausgleichs-Entgasungsvorrichtung für einen niedrigeren Druck ausgelegt werden kann. Der Dampfdruck des Kreislaufwasser in der Rücklaufleitung ist niedriger, als jener in der Vorlaufleitung. Des Weitern ist das Kreislaufwasser in der Vorlaufleitung energetisch höherwertig und lässt sich auch leichter an den Wärmeverbraucher abgeben. Das Kreislaufwasser in der Rücklaufleitung, das eine Temperatur über 105°C aufweist, führt zu einer einfachen, effektiven und permanenten Entgasung von nicht entgastem Wasser und dem Kreislaufwasser.

In einer vorteilhaften Ausführung wird ein Zwischenspeicher, zwischen der Vorlaufleitung und der Rücklaufleitung, angeordnet. Eine zusätzliche Umwälzpumpe, welche in der Vorlaufleitung nach dem Zwischenspeicher und vor dem zumindest einen Wärmeverbraucher angeordnet ist, sorgt dafür, dass die benötigte Wärmemenge an den Verbraucher geliefert wird. Dies ermöglicht einen kontinuierlicheren Betrieb des Wärmeverbrauchers in Phasen in denen weniger Energie, von der Beheizungseinrichtung, geliefert wird. Dies ist beispielsweise bei einem Elektrolichtbogenofen oder einem Stahlwerkskonverter der Fall, wenn während einer Chargierphase wenig oder keine Energie abgeben wird. Es kann aber auch dann vorteilhaft sein, wenn der Wärmeverbraucher unterschiedliche Mengen von Wärme benötigt. Dies ist der Fall wenn der Wärmeverbraucher Phasen mit größerem Wärmebedarf und Phasen mit kleinem oder keinem Wärmebedarf aufweist.

In einer weiteren vorteilhaften Ausführung wird nach dem Druckhalteventil, zum Einbringen von Kreislaufwasser in die Ausgleichs-Entgasungsvorrichtung, ein Düsenkopf angeordnet. Der Düsenkopf weist mehrere Bohrungen auf, durch welche das Wasser fein verteilt in die Ausgleichs-Entgasungsvorrichtung eingebracht wird. Der Düsenkopf verhindert Dampfschläge. Solche Dampfschläge treten auf, wenn Wasser und Dampf unterschiedlicher Temperatur aufeinander treffen. Deshalb soll durch einen Düsenkopf eine feine Verteilung erzielt werden. Dies hat auch zur Folge, dass die Entgasung vom eingebrachten nicht entgasten Wasser positiv beeinflusst wird.

Vorteilhafterweise ist in der Rücklaufleitung ein Notkühler angeordnet. Dieser Notkühler sorgt dafür, falls kein Wärmeverbraucher Wärme benötigt und eine möglicher Zwischenspeicher keine zusätzliche Wärme aufnehmen kann, dass die Rücklaufleitung eine nicht zu hohe Temperatur erreicht. Die in die Vorlaufleitung eingebrachte Wärme muss abgeführt werden. Dieser Notkühler dient als Sicherheit, damit die Anlagenteile keinen überhöhten Temperaturen ausgesetzt werden.

Die Beheizungseinrichtung ist vorteilhafterweise eine Abwärmerückgewinnungsanlage von einem Elektrolichtbogenofen oder Stahlwerkskonverter. Bei solchen Anlagen kommt es zu ständig wechselnden Bedingungen, weil aufgrund der unterschiedlichen Betriebszuständen - Chargieren von Schrott, Einschmelzvorgang, Abstechen der Stahlschmelze - die Wärmemengen stark variieren. Deshalb kommt es zu temperaturbedingten Volumenänderungen in der Vorlaufleitung und der Rücklaufleitung, welche durch Kreislaufwasser in der Ausgleichs-Entgasungsvorrichtung ausgeglichen werden.

In einer weiteren zweckmäßigen Ausprägung, weist die Öffnungsvorrichtung der Ausgleichs-Entgasungsvorrichtung einen Kondensator auf, welcher entweichenden Dampf zu Wasser kondensiert und dieses in die Ausgleichs-Entgasungsvorrichtung rückführt. Der Dampf des durch die Öffnungsvorrichtung entweichende Gas-Dampf Gemisches kann durch einen Kondensator als Wasser zurückgewonnen werden. Dieses Wasser kann in die Ausgleichs-Entgasungsvorrichtung rückgeführt werden. Dies ist besonders dann vorteilhaft, wenn größere Mengen an Dampf entweichen.

In einer weiteren bevorzugten Ausführungsform ist der Wärmeverbraucher derart ausgeführt, dass er ausschließlich mit Kreislaufwasser in flüssigem Zustand betrieben werden kann. Der Wärmeverbraucher soll so gestaltet sein, dass er optimiert für den Betrieb mit Kreislaufwasser in flüssigem Zustand ist. Ein solcher optimierter Wärmeverbraucher ist für die beschriebene Abhitzeanlage besonders geeignet um eine besonders effiziente Betriebsweise zu erreichen.

Die Aufgabe wird auch durch das eingangs genannte Verfahren gelöst, welches folgende Schritte umfasst:
Der Rücklaufwasserstrom weist, nach zumindest einem Wärmeverbraucher, eine Rücklauftemperatur von über 105°C auf.

Der Rücklaufwasserstrom liegt - wie auch der Vorlaufwasserstrom - immer im flüssigen Zustand vor. Aus der Ausgleichs-Entgasungsvorrichtung wird eine Teilmenge von Wasser dem Rücklaufwasserstrom zugeführt, um den Betriebsdruck im Wasserkreislauf aufrechtzuerhalten. Eine Teilmenge des Rücklaufwasserstroms wird anschließend durch ein Druckhalteventil, der Ausgleichs-Entgasungsvorrichtung zugeführt, wobei die Ausgleichs-Entgasungsvorrichtung einen Druckbereich über Atmosphärendruck und unter einem Betriebsdruck aufweist, welcher üblicherweise dem Sättigungsdruck, des in der Ausgleichs- Entgasungsvorrichtung vorliegenden Kreislaufwassers, entspricht. Der Betriebsdruck des Vorlaufwasserstromes und des Rücklaufwasserstromes liegt zumindest über dem Dampfdruck des Vorlaufwasserstromes. Der Ausgleichs-Entgasungsvorrichtung wird - bei einer Unterschreitung eines Soll-Füllstandes - nicht entgastes Wasser zugeführt. Der Soll-Füllstand wird derart gewählt, dass einerseits genügend Wasser - in der Ausgleichs-Entgasungsvorrichtung - vorhanden ist um den Betriebsdruck aufrechtzuerhalten und verloren gegangenes Wasser nachzufüllen. Andererseits soll bei hohen Temperaturen durch Volumenausdehnung entstehendes überschüssiges Wasser aus dem Wasserkreislauf aufgenommen werden. Gase, welche im nicht entgasten Wasser oder im Wasserkreislauf vorhanden sind, werden über eine Öffnungsvorrichtung der Ausgleichs-Entgasungsvorrichtung abgelassen. Solche Gase sind unter anderem Sauerstoff und Kohlendioxid.

Durch den Betrieb einer Abhitzeanlage für Heißwassererzeugung mit dem beschriebenen Verfahren ergeben sich dieselben Vorteile wie bei der Vorrichtung bereits erläutert. Dieses Verfahren stellt sicher, dass ständig eine Teilmenge von Wasser aus der Ausgleichs-Entgasungsvorrichtung in den Rücklaufwasserstrom gefördert wird. Ebenso wird ständig eine Teilmenge aus dem Rücklaufwasserstrom in die Ausgleichs-Entgasungsvorrichtung gefördert. Da der Rücklaufwasserstrom eine Rücklauftemperatur von über 105°C aufweist, wird eine Entgasung in der Ausgleichs-Entgasungsvorrichtung erzielt. Die Größe der Teilmenge aus dem Rücklaufwasserstrom, welche in die Ausgleichs-Entgasungsvorrichtung gefördert wird, ist abhängig von der Gesamtwassermenge im System und der Mindestdurchflussmenge der Druckhaltepumpen. Die Temperatur des Vorlaufwasserstromes ist stets größer oder gleich als die Temperatur des Rücklaufwasserstromes.

Ein vorteilhafte Ausführungsform sieht vor, dass Wärmeenergie des Vorlaufwasserstroms, bei Überschreiten einer Vorlaufsolltemperatur und gleichzeitigem Wärmeüberangebot von der Beheizungseinrichtung, in einem Zwischenspeicher gespeichert wird und bei unterschreiten einer Vorlaufsolltemperatur oder bei Wärmeunterangebot aus der Beheizungseinrichtung dem Vorlaufwasserstrom zugeführt werden kann. Besonders bei nicht konstant gelieferter Wärmemenge und wenn Wärmeverbraucher Phasen mit unterschiedlichem Wärmeverbrauch aufweisen, ist ein solcher Zwischenspeicher von Vorteil.

In vorteilhafter Weise wird die Teilmenge des Rücklaufwasserstroms nach dem Druckregelventil über einen Düsenkopf fein verteilt in die Ausgleichs-Entgasungsvorrichtung eingebracht. Die feine Verteilung bewirkt eine Vermeidung von Dampfschlägen, welche auftreten können wenn ein Wasser/Dampfstrahl mit hoher Temperatur in eine Wassermenge mit niedrigerer Temperatur eingebracht wird. Das Druckregelventil und der Düsenkopf werden vorzugsweise so kombiniert, dass der erzielte Druckabfall eine zusätzliche Entgasung, von nicht entgasten Wasser und/oder im Wasserkreislauf gebundener Gase, bewirkt.

Eine weitere mögliche Ausführungsform sieht vor, das im Rücklaufwasserstrom ein Notkühler angeordnet ist, zur Erniedrigung der Rücklauftemperatur, wenn diese eine maximale Rücklauftemperatur überschreitet. Diese Ausführung ermöglicht bei einer Störung, wenn der Wärmeverbraucher keine Wärme benötigen oder der Wärmespeicher bereits voll ist, dass die Wärme abgeführt werden kann, um einen sicheren Betrieb der Abhitzeanlage zu ermöglichen.

Eine vorteilhafte Ausführung des Verfahrens ist, dass die Beheizungseinrichtung mit Abwärme aus einer Abwärmerückgewinnungsanlage von einem Elektrolichtbogenofen oder Stahlwerkskonverter betrieben wird. Durch die ständig wechselnden Bedingungen, bei einem Elektrolichtbogenofen und einem Stahlwerkskonverter, ist das beschriebene Verfahren mit einer Ausgleichs-Entgasungsvorrichtung besonders gut geeignet, um die temperaturbedingten Volumenänderungen ausgleichen zu können.

Eine vorteilhafte Ausprägung des Verfahrens sieht vor, dass über die Öffnungsvorrichtung der Ausgleichs-Entgasungsvorrichtung entweichender Dampf durch einen Kondensator kondensiert wird und in die Ausgleichs-Entgasungsvorrichtung rückgeführt wird. Die Rückführung, des durch kondensieren des Dampfes gewonnen Wassers, hat den Vorteil, dass dadurch weniger nicht entgastes Wasser in die Ausgleichs-Entgasungsvorrichtung zugeführt werden muss.

Die Aufgabe wird weiterhin durch ein Computerprogramm umfassend Befehle, die bewirken, dass die zuvor beschriebene Abhitzeanlage die oben erläuterten Verfahrensschritte ausführt.

Die Aufgabe wird auch durch ein Computerlesbares Medium, auf dem das Computerprogram gespeichert ist ausgeführt.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die folgendes zeigen:
Fig. 1 eine schematische Darstellung einer erfinderischen Abhitzeanlage für Heißwassererzeugung
Fig. 2 eine schematische Darstellung einer vorteilhaften erfinderischen Abhitzeanlage für Heißwassererzeugung
Fig. 3 eine schematische Darstellung einer weiteren vorteilhaften erfinderischen Abhitzeanlage für Heißwassererzeugung

### Beschreibung der Ausführungsformen

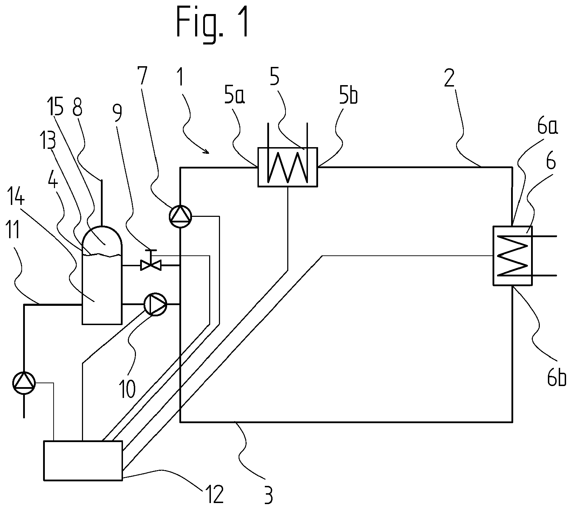

Fig. 1 zeigt eine erfindungsgemäße Abhitzeanlage für Heißwassererzeugung 1. Durch eine Beheizungseinrichtung 5 - mit einem Beheizungseinrichtungseingang 5a und einem Beheizungseinrichtungsausgang 5b - wird Wärme, von einem externen Erzeuger, auf einen in der in der Vorlaufleitung 2 geförderter Vorlaufwasserstrom übertragen. Der Beheizungseinrichtungsausgang 5b mündet in die Vorlaufleitung 2. Der Vorlaufwasserstrom weist eine Temperatur von über 110°C auf und der Druck in der Vorlaufleitung liegt über dem Dampfdruck des Vorlaufwasserstroms. Ein Wärmeverbraucher 6 - mit einem Wärmeverbrauchereingang 6a und einem Wärmeverbraucherausgang 6b - entzieht diese Wärme wieder aus dem geförderten Vorlaufwasserstrom der Vorlaufleitung 2. Solche Wärmeverbraucher 6 sind beispielsweise Dampferzeuger, Fernwärmeanlagen oder Trocknungsanlagen. Der Wärmeverbraucher 6 wird über die Vorlaufleitung 2 mit dem flüssigen Vorlaufwasserstrom über den Wärmeverbrauchereingang 6a gespeist. Anschließend wird ein Rücklaufwasserstrom, welcher nach dem Entzug der Wärme entsteht, gebildet. Dieser Rücklaufwasserstrom weist eine Temperatur von über 105°C auf und wird in einer Rücklaufleitung 3, welche mit dem Wärmeverbraucherausgang 6b direkt verbunden ist, mithilfe einer Umwälzpumpe 7 in Richtung Beheizungseinrichtung 5 gefördert. Die Rücklaufleitung 3 mündet in den Beheizungseinrichtungseingang 5a. Bevor die Beheizungseinrichtung 5 wieder erreicht wird, ist in der Rücklaufleitung 3 eine Abzweigung vorgesehen, welche eine Druckhaltepumpe 10 aufweist und in eine Ausgleichs-Entgasungsvorrichtung 4 mündet. In Bezug auf diese Erfindung wird das Wasser in der Ausgleichs-Entgasungsvorrichtung 4 sowie das Wasser in der Vorlaufleitung 2 und Rücklaufleitung 3 als Kreislaufwasser bezeichnet. Die Druckhaltepumpe 10 sorgt dafür, dass einerseits ein Betriebsdruck in der Abhitzeanlage für Heißwassererzeugung 1 aufrechterhalten wird und andererseits ein ständiger Zulauf von Kreislaufwasser, welches sich in der Ausgleichs-Entgasungsvorrichtung 4 befindet, in die Rücklaufleitung 3 erfolgt. Der Betriebsdruck liegt zumindest über dem Dampfdruck des Vorlaufwasserstroms. In der Ausgleichs-Entgasungsvorrichtung 4 herrscht üblicherweise Sättigungsdampfdruck des Anteils vom Kreislaufwasser, welches sich in der Ausgleichs-Entgasungsvorrichtung befindet. Solche Abhitzeanlagen für Heißwassererzeugung 1 werden typischer Weise in einem Vorlauftemperaturbereich von 130°C bis 230°C und einem Betriebsdruck von bis zu 45 bar betrieben, wobei sich der minimale Druck durch den Dampfdruck des Vorlauftemperaturbereiches ergibt. Der Rücklauftemperaturbereich liegt, abhängig von der Vorlauftemperatur, im Bereich von 105°C bis 200°C. Diese Temperatur- und Druckbereiche können in bestimmten Betriebszuständen - wie zum Beispiel bei der Inbetriebnahme oder dem Abstellen der Abhitzeanlage für Heißwassererzeugung 1 - abweichen. Durch ein Druckhalteventil 9 wird ständig eine Teilmenge aus dem Rücklaufwasserstrom der Rücklaufleitung 3 in die Ausgleichs-Entgasungsvorrichtung 4 eingelassen.

Typischerweise beträgt die Teilmenge aus dem Rücklaufwasserstrom welche der Ausgleichs-Entgasungsvorrichtung zugeführt wird mindestens 1 m³/h. Ein Einlass 11 - für nicht entgastes Wasser -ermöglicht, dass neues Wasser der Abhitzeanlage für Heißwassererzeugung 1 zugeführt wird. Dieses nicht entgaste Wasser enthält gebundene Gase wie zum Beispiel Sauerstoff oder Kohlenstoffdioxid. Diese Gase führen zu Korrosionsvorgängen in der Abhitzeanlage für Heißwassererzeugung 1. Diese gebundenen Gase sollen möglichst vom Wasser abgetrennt werden. Die Ausgleichs-Entgasungsvorrichtung 4 weist einen Wassersammelraum 14 und einen Gassammelraum 15 auf. Ein Füllstand 13 des Kreislaufwassers in der Ausgleichs-Entgasungsvorrichtung 4 verändert sich, je nachdem in welchem Betriebszustand sich die Abhitzeanlage für Heißwassererzeugung 1 gerade befindet. Die Betriebszustände ändern sich besonders bei nicht kontinuierlich arbeitenden Anlagen - beispielsweise in der Stahl- und Metallerzeugenden Industrie.

Eine Steuereinrichtung und/oder Regeleinrichung 12 erfasst sämtliche Messdaten aus den unterschiedlichen Anlagenteilen und steuert und/oder regelt die Anlage nach dem beschriebenen Verfahren.

Durch eine Öffnungsvorrichtung 8 wird ein Gas/Dampfgemisch, welches sich durch einen Entgasungsvorgang ergibt, abgelassen.

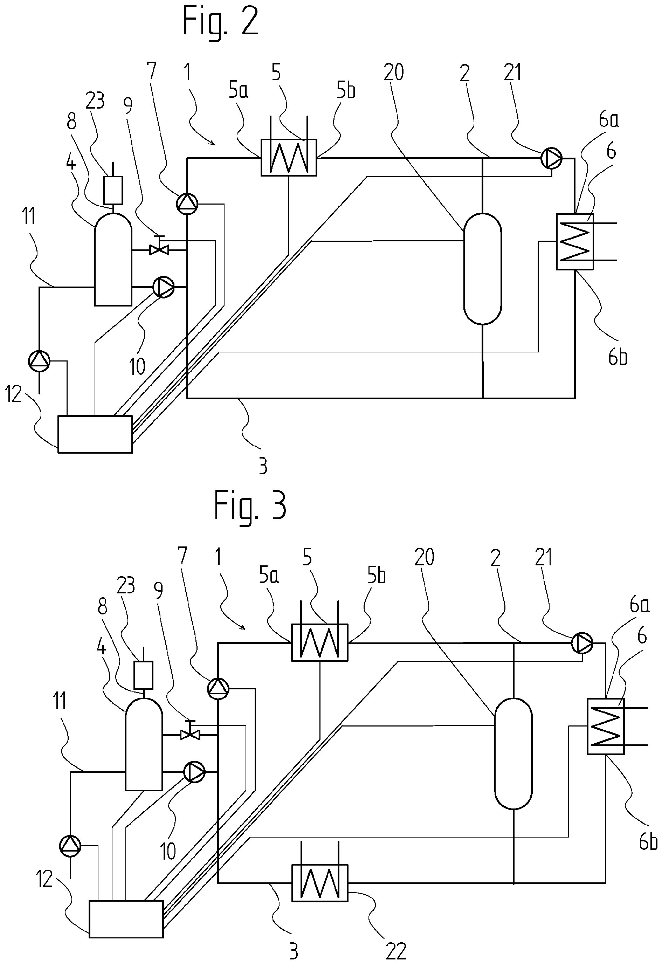

In Fig. 2 sind zusätzlich zu den bereits in Fig. 1 behandelten Anlagenteile noch ein Zwischenspeicher 20 mit einer zusätzlichen Umwälzpumpe 21 angeordnet.

Der Zwischenspeicher 20 erlaubt es überschüssige Wärme vorübergehend zu speichern und bei Bedarf dann an den Wärmeverbraucher 6 abzugeben. Dies ist besonders dann vorteilhaft, wenn der Wärmeverbraucher 6 nicht genügend Wärme abnehmen kann und bei Überschreiten von bestimmten Temperaturbereichen ein Problem für die Betriebssicherheit - der Abhitzeanlage für Heißwassererzeugung 1 - auftreten könnte. Ein weitere dargestellte vorteilhafte Ausführung ist der Kondensator 23. Dieser kondensiert entweichenden Dampf zu Wasser und führt dieses in die Ausgleichs-Entgasungsvorrichtung 4 zurück.

In Fig. 3 ist, zusätzlich zu den in Fig. 2 gezeigten Anlagenteilen, ein Notkühler 22, welcher in der Rücklaufleitung 3 angeordnet ist, gezeigt. Ein solcher Notkühler kann überschüssige Wärme abführen, falls die Wärmeverbraucher 6 keine Wärme abnehmen oder ein Problem in der Abhitzeanlage für Heißwassererzeugung auftritt. Dadurch wird gewährleistet, dass in der Rücklaufleitung 3 die zulässigen Temperaturen niemals überschritten werden.

### Bezugszeichenliste

- 1: Abhitzeanlage für Heißwassererzeugung
- 2: Vorlaufleitung
- 3: Rücklaufleitung
- 4: Ausgleichs-Entgasungsvorrichtung
- 5: Beheizungseinrichtung
- 5a: Beheizungseinrichtungseingang
- 5b: Beheizungseinrichtungsausgang
- 6: Wärmeverbraucher
- 6a: Wärmeverbrauchereingang
- 6b: Wärmeverbraucherausgang
- 7: Umwälzpumpe
- 8: Öffnungsvorrichtung
- 9: Druckhalteventil
- 10: Druckhaltepumpe
- 11: Einlass für nicht entgastes Wasser
- 12: Steuer- und/oder Regeleinrichtung
- 13: Füllstand
- 14: Wassersammelraum
- 15: Gassammelraum
- 20: Zwischenspeicher
- 21: zusätzliche Umwälzpumpe
- 22: Notkühler
- 23: Kondensator

## Patentansprüche

1. Abhitzeanlage zur Heißwasssererzeugung (1) umfassend zumindest eine Beheizungseinrichtung (5), zum Erwärmen von Kreislaufwasser, aufweisend einen Beheizungseinrichtungseingang (5a) und einen Beheizungseinrichtungsausgang (5b), eine Vorlaufleitung (2) geeignet für Kreislaufwasser mit einer Vorlauftemperatur über 110°C, zumindest ein Wärmeverbraucher (6), aufweisend einen Wärmeverbrauchereingang (6a) und einen Wärmeverbraucherausgang (6b) eine Rücklaufleitung (3) für Kreislaufwasser, wobei der Beheizungseinrichtungsausgang und der Wärmeverbrauchereingang an die Vorlaufleitung (2) angeschlossen sind und der Beheizungseinrichtungseingang und der Wärmeverbraucherausgang an die Rücklaufleitung (3) angeschlossen sind und eine Umwälzpumpe (7), **gekennzeichnet durch**,
- die Rücklaufleitung (3) geeignet zur Förderung von Kreislaufwasser mit einer Rücklauftemperatur von über 105°C,
- eine Ausgleichs-Entgasungsvorrichtung (4) geeignet für einen Entgasungsdruck, welcher über Atmosphärendruck liegt, mit einem Gassammelraum (15) und einem Wassersammelraum (14) für Kreislaufwasser,
- eine Druckhaltepumpe (10), welche zwischen Ausgleichs-Entgasungsvorrichtung (4) und der Rücklaufleitung (3) angeordnet ist und geeignet ist ständig Kreislaufwasser in die Rücklaufleitung (3) zu fördern,
- ein Druckhalteventil (9), welches zwischen Ausgleichs-Entgasungsvorrichtung (4) und der Rücklaufleitung (3) angeordnet ist und geeignet ist einen ständigen Rückfluss von Kreislaufwasser von der Rücklaufleitung (3) in die Ausgleichs-Entgasungsvorrichtung (4) zu ermöglichen,
- die Ausgleichs-Entgasungseinrichtung (4) einen Einlass geeignet für nicht entgastes Wasser (11) aufweist,
- die Ausgleichs-Entgasungsvorrichtung (4) eine Öffnungsvorrichtung (8) aufweist, welche im Gassammelraum (15) angeordnet ist und geeignet ist, um Gase, welche durch eine Entgasung von dem nicht entgasten Wasser oder Kreislaufwasser entstehen, abzuführen
- eine Steuer- und / oder Regeleinrichtung (12), welche ausgebildet ist, die Druckhaltepumpe und das Druckhalteventil derart anzusteuern und/oder zu regeln, dass sich ein Betriebsdruck des Kreislaufwasser - in der Vorlaufleitung und der Rücklaufleitung - einstellt der stets über dem Dampfdruck des Kreislaufwassers in der Vorlaufleitung liegt.

2. Vorrichtung nach Anspruch 1, **dadurch gekennzeichnet, dass** ein Zwischenspeicher (20) zwischen der Vorlaufleitung (2) und der Rücklaufleitung (3) angeordnet ist und eine zusätzliche Umwälzpumpe (21) welche in der Vorlaufleitung (2) nach dem Zwischenspeicher (20) und vor dem zumindest einen Wärmeverbraucher (6) angeordnet ist.

3. Vorrichtung nach einem der vorhergehenden Ansprüche, **dadurch gekennzeichnet, dass** nach dem Druckhalteventil (9) Kreislaufwasser über einen Düsenkopf in die Ausgleichs-Entgasungsvorrichtung eingebracht wird.

4. Vorrichtung nach einem der vorhergehenden Ansprüche, **dadurch gekennzeichnet, dass** in der Rücklaufleitung (3) ein Notkühler (22) angeordnet ist.

5. Vorrichtung nach einem der vorhergehenden Ansprüche, **dadurch gekennzeichnet, dass** die Beheizungseinrichtung (5) eine Abwärmerückgewinnungsanlage von einem Elektrolichtbogenofen oder Stahlwerkskonverter ist

6. Vorrichtung nach einem der vorhergehenden Ansprüche, **dadurch gekennzeichnet, dass** die Öffnungsvorrichtung (8) der Ausgleichs-Entgasungsvorrichtung (4) einen Kondensator (23) aufweist, welcher entweichendes Dampf kondensiert und in die Ausgleichs-Entgasungsvorrichtung (4) rückführt.

7. Vorrichtung nach einem der vorhergehenden Ansprüche, **dadurch gekennzeichnet, dass** der Wärmeverbraucher (6) derart ausgeführt ist, dass er für den Betrieb mit Kreislaufwasser in flüssigem Zustand geeignet ist.

8. Verfahren zum Betreiben einer Abhitzeanlage zur Heißwassererzeugung (1), wobei die Abhitzeanlage einen geschlossenen Wasserkreislauf mit einem Rücklaufwasserstrom aufweist, wobei durch eine Beheizungseinrichtung (5) der Rücklaufwasserstrom auf eine Vorlauftemperatur von über 110°C aufgeheizt wird, wodurch ein Vorlaufwasserstrom erzeugt wird, der geschlossene Wasserkreislauf wird mit einem Betriebsdruck betrieben, der über dem Dampfdruck des Vorlaufwasserstromes liegt damit der Vorlaufwasserstrom ausschließlich im flüssigen Zustand verbleibt, aus dem Vorlaufwasserstrom wird an zumindest einem Wärmeverbraucher (6) Wärmeenergie aus dem flüssigen Vorlaufwasserstrom entzogen, **dadurch gekennzeichnet, dass**
- der Rücklaufwasserstrom eine Rücklauftemperatur von über 105°C aufweist,
- aus einer Ausgleichs-Entgasungsvorrichtung (4) wird eine Teilmenge von Wasser dem Rücklaufwasserstrom zugeführt um den Betriebsdruck im geschlossenen Wasserkreislauf aufrechtzuerhalten,
- eine Teilmenge des Rücklaufwasserstroms wird über ein Druckhalteventil der Ausgleichs-Entgasungsvorrichtung (4) zugeführt, wobei die Ausgleichs-Entgasungsvorrichtung (4) einen Druckbereich über Atmosphärendruck und unter dem Betriebsdruck aufweist,
- der Ausgleichs-Entgasungsvorrichtung (4) wird bei einer Unterschreitung eines Soll-Füllstandes nicht entgastes Wasser zugeführt,
- aus der Ausgleichs-Entgasungsvorrichtung (4) werden über eine Öffnungsvorrichtung (8) Gase, welche durch eine Entgasung von nicht entgastem Wasser oder dem Rücklaufwasserstrom entstehen, abgelassen.

9. Verfahren nach Anspruch 8, **dadurch gekennzeichnet, dass** Wärmeenergie des Vorlaufwasserstroms bei Überschreiten einer Vorlaufsolltemperatur und Wärmeüberangebot aus der Beheizungseinrichtung (5) in einem Zwischenspeicher gespeichert wird und bei unterschreiten einer Vorlaufsolltemperatur oder Wärmeunterangebot aus der Beheizungseinrichtung (5) dem Vorlaufwasserstrom zugeführt werden kann.

10. Verfahren nach einem der Ansprüche 8 oder 9, **dadurch gekennzeichnet, dass** das Kreislaufwasser nach dem Druckhalteventil über einen Düsenkopf fein verteilt in die Ausgleichs-Entgasungsvorrichtung (4) eingebracht wird.

11. Verfahren nach einem der Ansprüche 8 - 10, **dadurch gekennzeichnet, dass** im Rücklaufwasserstrom ein Notkühler (22) angeordnet ist, zur Erniedrigung der Rücklauftemperatur, wenn diese eine maximale Rücklauftemperatur überschreitet

12. Verfahren nach einem der Ansprüche 8 - 11, **dadurch gekennzeichnet, dass** die Beheizungseinrichtung (5) mit Abwärme aus einer Abwärmerückgewinnungsanlage von einem Elektrolichtbogenofen oder Stahlwerkskonverter betrieben wird.

13. Verfahren nach einem der Ansprüche 8 - 12, **dadurch gekennzeichnet, dass** über die Öffnungsvorrichtung (8) der Ausgleichs-Entgasungsvorrichtung (4) entweichender Dampf durch einen Kondensator (23) kondensiert wird und ein entstehendes Kondensat in die Ausgleichs-Entgasungsvorrichtung (4) rückgeführt wird.

14. Computerprogramm umfassend Befehle, die bewirken, dass die Abhitzeanlage zur Heißwassererzeugung (1) nach Anspruch 1 bis 7 die Verfahrensschritte nach Anspruch 8-13 ausführt.

15. Computerlesbares Medium, auf dem das Computerprogram nach Anspruch 14 gespeichert ist.

## Claims

1. Waste-heat installation for hot-water generation (1) comprising
at least one heating device (5) for heating circulation water, which has a heating-device entry (5a) and a heating-device exit (5b),
a feed line (2) suitable for circulation water with a feed temperature of above 110°C, at least one heat consumer (6), which has a heat-consumer entry (6a) and a heat-consumer exit (6b),
a return line (3) for circulation water, wherein the heating-device exit and the heat-consumer entry are connected to the feed line (2) and the heating-device entry and the heat-consumer exit are connected to the return line (3) and a circulation pump (7),
**characterized by**
- the return line (3) being suitable for conveying circulation water with a return temperature of above 105°C,
- a compensating degassing apparatus (4) suitable for a degassing pressure above atmospheric pressure, having a gas collection space (15) and a water collection space (14) for circulation water,
- a pressure-maintaining pump (10), which is arranged between the compensating degassing apparatus (4) and the return line (3) and is suitable for constantly conveying circulation water into the return line (3),
- a pressure-maintaining valve (9), which is arranged between the compensating degassing apparatus (4) and the return line (3) and is suitable for allowing a constant return flow of circulation water from the return line (3) into the compensating degassing apparatus (4),
- the compensating degassing apparatus (4) having an inlet suitable for non-degassed water (11),
- the compensating degassing apparatus (4) having an opening apparatus (8), which is arranged in the gas collection space (15) and is suitable for removing gases that are produced by way of degassing of the non-degassed water or circulation water,
- a control and/or regulating device (12), which is configured to actuate and/or regulate the pressure-maintaining pump and the pressure-maintaining valve in such a way that an operating pressure of the circulation water - in the feed line and the return line - that is at all times above the steam pressure of the circulation water in the feed line is established.

2. Apparatus according to Claim 1, **characterized in that** an intermediate store (20) is arranged between the feed line (2) and the return line (3), and an additional circulation pump (21) is arranged in the feed line (2) after the intermediate store (20) and before the at least one heat consumer (6).

3. Apparatus according to either of the preceding claims, **characterized in that**, after the pressure-maintaining valve (9), circulation water is introduced into the compensating degassing apparatus via a nozzle head.

4. Apparatus according to one of the preceding claims, **characterized in that** an emergency cooler (22) is arranged in the return line (3).

5. Apparatus according to one of the preceding claims, **characterized in that** the heating device (5) is a waste-heat recovery system of an electric arc furnace or steelworks converter.

6. Apparatus according to one of the preceding claims, **characterized in that** the opening apparatus (8) of the compensating degassing apparatus (4) has a condenser (23), which condenses escaping steam and returns it into the compensating degassing apparatus (4).

7. Apparatus according to one of the preceding claims, **characterized in that** the heat consumer (6) is designed in such a way that it is suitable for operation with circulation water in the liquid state.

8. Method for operating a waste-heat installation for hot-water generation (1), wherein the waste-heat installation has a closed water circuit with a return water stream, wherein the return water stream is heated up to a feed temperature of above 110°C by way of a heating device (5), whereby a feed water stream is generated, the closed water circuit is operated at an operating pressure above the steam pressure of the feed water stream in order for the feed water stream to remain exclusively in the liquid state, and heat energy of the liquid feed water stream is extracted from the feed water stream at at least one heat consumer (6), **characterized in that**
- the return water stream has a return temperature of above 105°C,
- a partial quantity of water is fed from a compensating degassing apparatus (4) to the return water stream in order for the operating pressure in the closed water circuit to be maintained,
- a partial quantity of the return water stream is fed via a pressure-maintaining valve to the compensating degassing apparatus (4), wherein the compensating degassing apparatus (4) has a pressure range above atmospheric pressure and below the operating pressure,
- non-degassed water is fed to the compensating degassing apparatus (4) if a target fill level is fallen below,
- gases that are produced by way of degassing of non-degassed water or of the return water stream are discharged via an opening apparatus (8) from the compensating degassing apparatus (4).

9. Method according to Claim 8, **characterized in that** heat energy of the feed water stream is stored in an intermediate store if a target feed temperature is exceeded and there is an over-supply of heat from the heating device (5), and can be fed to the feed water stream if a target feed temperature is fallen below or if there is an under-supply of heat from the heating device (5) .

10. Method according to either of Claims 8 and 9, **characterized in that**, after the pressure-maintaining valve, the circulation water is introduced in finely distributed form into the compensating degassing apparatus (4) via a nozzle head.

11. Method according to one of Claims 8-10, **characterized in that** an emergency cooler (22) is arranged in the return water stream for the purpose of the return temperature being lowered if it exceeds a maximum return temperature.

12. Method according to one of Claims 8-11, **characterized in that** the heating device (5) is operated with waste heat from a waste-heat recovery system of an electric arc furnace or steelworks converter.

13. Method according to one of Claims 8-12, **characterized in that** steam escaping via the opening apparatus (8) of the compensating degassing apparatus (4) is condensed by a condenser (23), and a condensate produced is returned into the compensating degassing apparatus (4).

14. Computer program comprising instructions which have the effect that the waste-heat installation for hot-water generation (1) according to Claims 1 to 7 carries out the method steps according to Claims 8-13.

15. Computer-readable medium on which the computer program according to Claim 14 is stored.

## Revendications

1. Installation à flammes perdues destinée à la production d'eau chaude (1) qui comprend au moins un mécanisme de chauffage (5) destiné au réchauffement de l'eau en circulation, qui présente une entrée de mécanisme de chauffage (5a) et une sortie de mécanisme de chauffage (5b), une conduite d'alimentation (2) qui est appropriée pour de l'eau en circulation possédant une température d'alimentation qui est supérieure à 110 °C, au moins un consommateur de chaleur (6) qui présente une entrée de consommateur de chaleur (6a) et une sortie de consommateur de chaleur (6b), une conduite de retour (3) pour l'eau en circulation ; dans laquelle la sortie du mécanisme de chauffage et l'entrée du consommateur de chaleur sont raccordées à la conduite d'alimentation (2) et l'entrée du mécanisme de chauffage et la sortie du consommateur de chaleur sont raccordées à la conduite de retour (3), ainsi qu'une pompe de circulation (7), **caractérisée par** :
- la conduite de retour (3) appropriée pour le transport d'une eau en circulation qui possède une température de retour qui est supérieur à 105 °C ;
- un dispositif de régulation-dégazage (4), appropriée pour une pression de dégazage qui se situe au-dessus de la pression atmosphérique, qui comprend une chambre (15) de récolte pour le gaz et une chambre (14) de récolte pour l'eau pour une eau en circulation ;
- une pompe (10) de maintien de la pression qui est montée entre le dispositif de régulation-dégazage (4) et la conduite de retour (3) et qui est appropriée pour transporter en continu de l'eau en circulation dans la conduite de retour (3) ;
- une soupape (9) de maintien de la pression qui est monté entre le dispositif de régulation-dégazage (4) et la conduite de retour (3) et qui est appropriée pour permettre un retour en continu de l'eau en circulation à partir de la conduite de retour (3) jusque dans le dispositif de régulation-dégazage (4) ;
- le dispositif de régulation-dégazage (4) présente une entrée qui est appropriée pour de l'eau (11) qui n'a pas été soumise à un dégazage ;
- le dispositif de régulation-dégazage (4) présente un dispositif d'ouverture (8) qui est monté dans la chambre (15) de récolte pour le gaz qui est appropriée pour évacuer des gaz que l'on obtient par l'intermédiaire d'un dégazage de l'eau qui n'a pas été soumise à un dégazage ou de l'eau en circulation ;
- un mécanisme de commande et/ou de réglage (12) qui est réalisé pour la commande et/le réglage de la pompe de maintien de la pression et de la soupape de maintien de la pression, d'une manière telle que se met en place une pression d'exploitation de l'eau en circulation - dans la conduite d'alimentation et dans la conduite de retour - qui se situe toujours au-dessus de la pression de vapeur de l'eau en circulation dans la conduite d'alimentation.

2. Dispositif selon la revendication 1, **caractérisé en ce qu'**un accumulateur auxiliaire (20) est disposé entre la conduite d'alimentation (2) et la conduite de retour (3) et une pompe de circulation supplémentaire (21) est disposée, dans la conduite d'alimentation (2), après l'accumulateur auxiliaire (20) et avant l'au moins un consommateur de chaleur (6).

3. Dispositif selon l'une quelconque des revendications précédentes, **caractérisé en ce que** l'on introduit, après la soupape (9) de maintien de la pression, de l'eau en circulation par l'intermédiaire d'une tête d'injection dans le dispositif de régulation-dégazage.

4. Dispositif selon l'une quelconque des revendications précédentes, **caractérisé en ce qu'**un dispositif de refroidissement d'urgence (22) est monté dans la conduite de retour (3).

5. Dispositif selon l'une quelconque des revendications précédentes, **caractérisé en ce que** le mécanisme de chauffage (5) représente une installation de récupération de la chaleur perdue d'un four à arc électrique ou d'un convertisseur sidérurgique.

6. Dispositif selon l'une quelconque des revendications précédentes, **caractérisé en ce que** le dispositif d'ouverture (8) du dispositif de régulation-dégazage (4) présente un condenseur (23) qui condense la vapeur qui s'échappe et qui renvoie cette dernière dans le dispositif de régulation-dégazage (4).

7. Dispositif selon l'une quelconque des revendications précédentes, **caractérisé en ce que** le consommateur de chaleur (6) est conçu d'une manière telle qu'il est approprié pour l'exploitation avec de l'eau en circulation à l'état liquide.

8. Procédé destiné à l'exploitation d'une installation à flammes perdues pour la production d'eau chaude (1) ; dans lequel l'installation à flammes perdues présente un circuit fermé pour l'eau qui comprend un courant d'eau de retour ; dans lequel le courant d'eau de retour est chauffé, par l'intermédiaire d'un mécanisme de chauffage (5), à une température d'alimentation qui est supérieure à 110 °C, tant et si bien que l'on obtient un courant d'eau d'alimentation ; le circuit fermé pour l'eau est mis en service avec une pression d'exploitation qui est supérieure à la pression de vapeur du courant d'eau d'alimentation dans le but de maintenir le courant d'eau d'alimentation exclusivement à l'état liquide ; à partir du courant d'eau d'alimentation, on prélève, à au moins un consommateur de chaleur (6), de l'énergie thermique à partir du courant d'alimentation d'eau liquide ; **caractérisé en ce que** :
- le courant d'eau de retour présente une température de retour qui est supérieure à 105 °C ;
- à partir d'un dispositif de régulation-dégazage (4) on achemine une quantité partielle d'eau au courant d'eau de retour afin de maintenir la pression d'exploitation dans le circuit fermé pour l'eau ;
- on achemine une quantité partielle du courant d'eau de retour au dispositif de régulation-dégazage (4) par l'intermédiaire d'une soupape de maintien de la pression ; dans lequel le dispositif de régulation-dégazage (4) présente une zone de pression qui est supérieure à la pression atmosphérique et qui est inférieure à la pression d'exploitation ;
- dans le cas d'un dépassement vers le bas d'un niveau de consigne, on achemine de l'eau qui n'a pas été soumise à un dégazage, au dispositif de régulation-dégazage (4) ;
- à partir du dispositif de régulation-dégazage (4) on évacue, en passant par un dispositif d'ouverture (8) des gaz que l'on obtient par l'intermédiaire d'un dégazage d'eau qui n'a pas été soumise à un dégazage ou du courant d'eau de retour.

9. Procédé selon la revendication 8, **caractérisé en ce que** l'on stocke de l'énergie thermique du courant d'eau d'alimentation dans le cas d'un dépassement vers le haut d'une température d'alimentation de consigne et d'une offre surabondante de chaleur à partir du mécanisme de chauffage (5), dans un accumulateur auxiliaire et, dans le cas d'un dépassement vers le bas d'une température d'alimentation de consigne ou d'une pénurie de chaleur, on peut l'acheminer au courant d'eau d'alimentation à partir du mécanisme de chauffage (5).

10. Procédé selon l'une quelconque des revendications 8 ou 9, **caractérisé en ce que** l'eau en circulation est introduite, après la soupape de maintien de la pression, par l'intermédiaire d'une tête d'injection à l'état finement dispersé, dans le dispositif de régulation-dégazage (4).

11. Procédé selon l'une quelconque des revendications 8 à 10, **caractérisé en ce qu'**un dispositif de refroidissement d'urgence (22) est monté dans le courant d'eau de retour, qui est destiné à diminuer la température de retour lorsque celle-ci dépasse vers le haut une température de retour maximale.

12. Procédé selon l'une quelconque des revendications 8 à 11, **caractérisé en ce que** le mécanisme de chauffage (5) est entraîné avec la chaleur perdue qui provient d'une installation à flammes perdues d'un four à arc électrique ou d'un convertisseur sidérurgique.

13. Procédé selon l'une quelconque des revendications 8 à 12, **caractérisé en ce que** la vapeur qui s'échappe à partir du dispositif de régulation-dégazage (4) en passant par le dispositif d'ouverture (8) est condensée par l'intermédiaire d'un condenseur (23) et un condensat que l'on obtient est renvoyé dans le dispositif de régulation-dégazage (4).

14. Programme informatique qui comprend des ordres qui font en sorte que l'installation à flammes perdues destinée à la production d'eau chaude (1) selon les revendications 1 à 7 mette en œuvre les étapes opératoires selon les revendications 8 à 13.

15. Support lisible par ordinateur, sur lequel est mis en mémoire le programme informatique selon la revendication 14.
